# EUROPEAN PATENT APPLICATION

(11) **EP 4 572 247 A1**
(43) Date of publication of application: **18.06.2025**
(21) Application number: 22954221.2
(22) Date of filing: 08.08.2022
(51) Int. Cl.: H04L 27/00

(54) **DMRS INFORMATION INDICATION METHOD AND APPARATUS, AND DEVICE AND STORAGE MEDIUM**

(71) Applicant: Beijing Xiaomi Mobile Software Co., Ltd., Beijing 100085 (CN)
(72) Inventor: LUO, Xingyi, Beijing 100085 (CN)
(74) Representative: Dehns Germany Partnerschaft mbB
(86) International application number: PCT/CN2022/110853
(87) International publication number: WO 2024/031241

(57) **Abstract**

The present application relates to the field of mobile communications. Disclosed are a DMRS information indication method and apparatus, and a device and a storage medium. The method comprises: a first terminal receiving DMRS indication information, which is sent by a network device, wherein the DMRS indication information is used for indicating that the first terminal uses a legacy DMRS mapping type, or for indicating a start position corresponding to an enhanced DMRS mapping type. When a first terminal supports an enhanced DMRS mapping type, a network device configures, for the first terminal, a legacy DMRS mapping type or a start position corresponding to the enhanced DMRS mapping type, so as to ensure that when the first terminal coexists with another terminal that supports the legacy DMRS mapping type, the first terminal can determine other resources by using resources of the legacy DMRS mapping type or on the basis of the start position, thereby avoiding the problem of the generation of interference between the first terminal and a second terminal, and thus improving the reliability of communication between the network device and each terminal.

## Description

### TECHNICAL FIELD

The disclosure relates to the field of mobile communication technologies, and in particular to a method and an apparatus for indicating demodulation reference signal (DMRS) information, a device and a storage medium.

### BACKGROUND

In a mobile communication system, an enhanced DMRS mapping type is proposed. A terminal that supports the enhanced DMRS mapping type can use the enhanced DMRS mapping type to communicate with a network device. However, if the network device can communicate with a first terminal that supports the enhanced DMRS mapping type and a second terminal that does not support the enhanced DMRS mapping type at the same time, and the first terminal uses the enhanced DMRS mapping type and the second terminal uses a legacy DMRS mapping type, this will result in interference caused by the DMRS. How to avoid the interference caused by DMRS between the first terminal and the second terminal becomes an urgent problem that needs to be solved.

### SUMMARY

Embodiments of the present disclosure provide a method and an apparatus for indicating DMRS information, a device and a storage medium to prevent the problem of interference between a first terminal and a second terminal, thereby improving reliability of communication between network device and each terminal. The technical solutions are as follows.

According to a first aspect of the present disclosure, a method for indicating DMRS information is provided. The method is performed by a first terminal supporting an enhanced DMRS mapping type, and the method includes:
receiving DMRS indication information sent by a network device, in which the DMRS indication information is used to instruct the first terminal to use a legacy DMRS mapping type, or the DMRS indication information is used to indicate a starting position corresponding to the enhanced DMRS mapping type.

According to a second aspect of the present disclosure, a method for indicating DMRS information is provided. The method is performed by a network device, and includes:
sending DMRS indication information to a first terminal, in which the DMRS indication information is used to instruct the first terminal to use a legacy DMRS mapping type, or the DMRS indication information is used to indicate a starting position corresponding to an enhanced DMRS mapping type;
in which the first terminal supports the enhanced DMRS mapping type.

According to a third aspect of the present disclosure, an apparatus for indicating DMRS information is provided. The first terminal supports an enhanced DMRS mapping type. The apparatus includes:
a receiving module, configured to receive DMRS indication information sent by a network device, in which the DMRS indication information is used to instruct the first terminal to use a legacy DMRS mapping type, or the DMRS indication information is used to indicate a starting position corresponding to the enhanced DMRS mapping type.

According to a fourth aspect of the present disclosure, an apparatus for indicating DMRS information is provided. The apparatus includes:
a sending module, configured to send DMRS indication information to a first terminal, in which the DMRS indication information is used to instruct the first terminal to use a legacy DMRS mapping type, or the DMRS indication information is used to indicate a starting position corresponding to an enhanced DMRS mapping type;
in which the first terminal supports the enhanced DMRS mapping type.

According to a fifth aspect of the present disclosure, a terminal is provided. The terminal includes: a processor; and a transceiver connected to the processor; and a memory for storing instructions executable by the processor. The processor is configured to load and execute the executable instructions, to implement the method for indicating DMRS information as described in the above aspect.

According to a sixth aspect of the present disclosure, a network device is provided. The network device includes: a processor; a transceiver connected to the processor; and a memory for instructions executable by the processor. The processor is configured to load and execute the executable instructions, to implement the method for indicating DMRS information as described in the above aspect.

According to a seventh aspect of the present disclosure, a communication system is provided. The communication system includes a terminal and a network device. The terminal is configured to implement the method for indicating DMRS information as described in the first aspect. The network device is configured to implement the method for indicating DMRS information as described in the second aspect above.

According to an eighth aspect of the present disclosure, a computer-readable storage medium is provided. The readable storage medium stores an executable program code. The executable program code is loaded and executed by a processor to implement the method for indicating DMRS information as described above.

According to a ninth aspect of the present disclosure, a chip is provided. The chip includes programmable logic circuits and/or program instructions. When the chip is run on a terminal or a network device, it is used to implement the method for indicating DMRS information in the above aspect.

According to a tenth aspect of the present disclosure, a computer program product is provided. When the computer program product is executed by a processor of a terminal or a network device, it is used to implement the method for indicating DMRS information of the above aspects.

In the solution provided by the present disclosure, when the first terminal supports the enhanced DMRS mapping type, the network device configures the legacy DMRS mapping type or the starting position corresponding to the enhanced DMRS mapping type for the first terminal, which ensures that when it occurs that the first terminal coexist with another terminal supporting the legacy DMRS mapping type, it is ensured that the first terminal can use a resource of the legacy DMRS mapping type or determine other resources based on the starting position, to prevent the interference problem between the first terminal and the second terminal, thereby improving the reliability of communication between the network device and various terminals.

### BRIEF DESCRIPTION OF THE DRAWINGS

In order to more clearly illustrate the technical solutions in the embodiments of the present disclosure, the drawings needed to be used in the description of the embodiments will be briefly introduced below. Obviously, the drawings in the following description are only some embodiments of the present disclosure. For those of ordinary skill in the art, other drawings can also be obtained based on these drawings without exerting creative efforts.
FIG. 1 shows a block diagram of a communication system provided by an exemplary embodiment of the present disclosure.
FIG. 2 shows a schematic diagram of frequency domain resources provided by an exemplary embodiment of the present disclosure.
FIG. 3 shows a flow chart of a method for indicating DMRS information provided by an exemplary embodiment of the present disclosure.
FIG. 4 shows a flow chart of a method for indicating DMRS information provided by an exemplary embodiment of the present disclosure.
FIG. 5 shows a schematic diagram of another frequency domain resources provided by an exemplary embodiment of the present disclosure.
FIG. 6 shows a schematic diagram of yet another frequency domain resources provided by an exemplary embodiment of the present disclosure.
FIG. 7 shows a flow chart of a method for indicating DMRS information provided by an exemplary embodiment of the present disclosure.
FIG. 8 shows a flow chart of a method for indicating DMRS information provided by an exemplary embodiment of the present disclosure.
FIG. 9 shows a block diagram of an apparatus for indicating DMRS information provided by an exemplary embodiment of the present disclosure.
FIG. 10 shows a block diagram of another apparatus for indicating DMRS information provided by an exemplary embodiment of the present disclosure.
FIG. 11 shows a block diagram of an apparatus for indicating DMRS information provided by an exemplary embodiment of the present disclosure.
FIG. 12 shows a block diagram of another apparatus for indicating DMRS information provided by an exemplary embodiment of the present disclosure.
FIG. 13 shows a schematic structural diagram of a communication device provided by an exemplary embodiment of the present disclosure.

### DETAILED DESCRIPTION

In order to make the purposes, technical solutions and advantages of the present disclosure clearer, the embodiments of the present disclosure will be further described in detail below with reference to the accompanying drawings.

Exemplary embodiments will be described in detail in the present disclosure, examples of which are illustrated in the accompanying drawings. When the following description refers to the drawings, the same numbers in different drawings refer to the same or similar elements, unless otherwise indicated. The implementations described in the following exemplary embodiments do not represent all implementations consistent with the present disclosure. Rather, they are merely examples of apparatus and methods consistent with aspects of the present disclosure as detailed in the appended claims.

The term used in the present disclosure is for the purpose of describing particular embodiments only and is not intended to be limiting of the present disclosure. As used in the present disclosure and the appended claims, the singular forms "a", "the" and "this" are intended to include the plural forms as well, unless the context clearly dictates otherwise. It will also be understood that the term "and/or" as used herein refers to and includes any and all possible combinations of one or more of the associated listed items.

It should be understood that although the terms "first", "second", "third", etc. may be used in the present disclosure to describe various information, the information should not be limited to these terms. These terms are only used to distinguish information of the same type from each other. For example, without departing from the scope of the present disclosure, the first information may also be called second information, and similarly, the second information may also be called first information. Depending on the context, for example, the word "if" as used herein may be interpreted as "when" or "in a case that" or "in response to determining that".

It should be noted that all of information (including but not limited to user equipment information, user personal information, etc.), data (including but not limited to data used for analysis, stored data, displayed data, etc.) and signals involved in the present disclosure, are authorized by the user or fully authorized by all parties, and the collection, use and processing of relevant data need to comply with relevant laws, regulations and standards of relevant countries and regions.

First, an application scenario of the present disclosure will be explained.

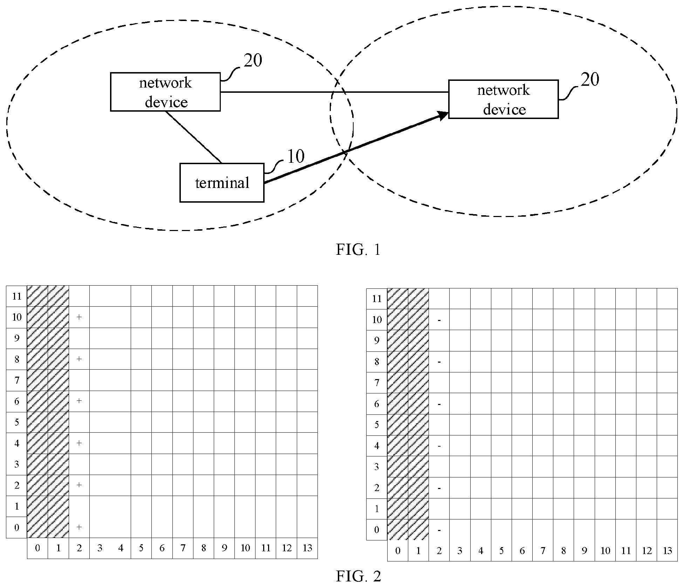

FIG. 1 shows a block diagram of a communication system provided by an exemplary embodiment of the present disclosure. The communication system may include: a terminal 10 and a network device 20.

The number of terminals 10 is usually more than one, and one or more terminals 10 may be distributed in a cell managed by each network device 20. The terminal 10 may include various handheld devices, vehicle-mounted devices, wearable devices, computing devices or other processing devices connected to wireless modems with wireless communication functions, as well as various forms of user equipment (UE), mobile stations (MS) and so on. For convenience of description, in the embodiments of the present disclosure, the above-mentioned devices are collectively referred to as a terminal.

The network device 20 is a device deployed in an access network to provide a wireless communication function for the terminal 10. For convenience of description, in the embodiments of the present disclosure, the above-mentioned devices that provide the wireless communication function for the terminal 10 are collectively referred to as a network device. A connection can be established between the network device 20 and the terminal 10 through an air interface, so that communication, including signaling and data interaction, can be performed through the connection. The number of network devices 20 may be more than one, and communication between two adjacent network devices 20 may also be carried out in a wired or wireless manner. The terminal 10 can send a beam report among different network devices 20, that is, establish connections with different network devices 20.

The network device 20 may include various forms of macro base stations, micro base stations, relay stations, access points, etc. In systems using different wireless access technologies, the names of devices with network device functions may be different. For example, in a 5G New Radio (NR) system, it is called a gNodeB or a gNB. As communications technologies evolves, the name "network device" may change.

The "5G NR system" in the embodiments of the present disclosure may also be called a 5G system or an NR system, but those skilled in the art can understand its meaning. The technical solutions described in the embodiments of the present disclosure can be applied to the 5G NR system, and can also be applied to subsequent evolution systems of the 5G NR system.

In some embodiments, the network device 20 may be configured with multiple Transmission-Reception Points (TRPs) to serve the terminal 10 through multiple TRPs.

Alternatively, the network device 20 may transmit via multi-TRP joint transmission (JT) or coherent joint transmissions (CJT).

In some embodiments, in a CJT scenario, the network device 20 may jointly schedule multiple terminals through the multiple TRPs.

Optionally, in the CJT scenario, the network device may jointly schedule the first terminal and the second terminal through the multiple TRPs.

The first terminal and the second terminal support different mapping types. The first terminal is a terminal that supports an enhanced DMRS mapping type, and the second terminal is a terminal that supports a legacy DMRS mapping type.

It should be noted that if the first terminal and the second terminal exist at the same time, a conflict may occur when the network device schedules the first terminal and the second terminal at the same time, and causing interference.

For example, as shown in FIG. 2, resources are provided for the first terminal and the second terminal through frequency division multiplexing and code domain orthogonality. For a resource on the left, the first terminal occupies a "+" resource, and the second terminal cannot occupy a "-" resource corresponding to "+" on the right.

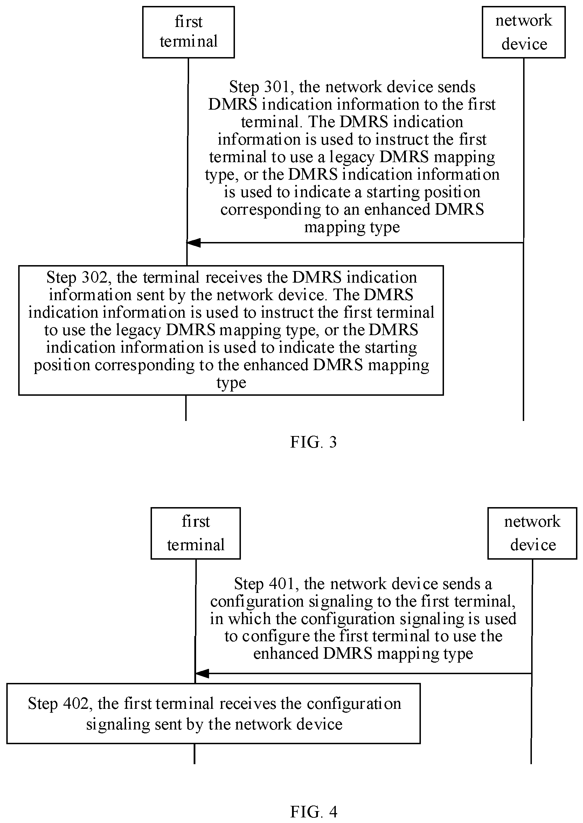

FIG. 3 shows a flow chart of a method for indicating DMRS information provided by an exemplary embodiment of the present disclosure. The method is exemplarily applicable to the first terminal and the network device as shown in FIG. 1. The method includes at least the following contents.

Step 301, the network device sends DMRS indication information to the first terminal. The DMRS indication information is used to instruct the first terminal to use a legacy DMRS mapping type, or the DMRS indication information is used to indicate a starting position corresponding to an enhanced DMRS mapping type.

Step 302, the terminal receives the DMRS indication information sent by the network device. The DMRS indication information is used to instruct the first terminal to use the legacy DMRS mapping type, or the DMRS indication information is used to indicate the starting position corresponding to the enhanced DMRS mapping type.

The first terminal supports the enhanced DMRS mapping type.

In an embodiment of the present disclosure, the network device indicates a DMRS mapping type used by the first terminal through the DMRS indication information, so that after receiving the DMRS indication information, the first terminal determines to use the DMRS mapping type indicated by the DMRS indication information to determine a resource, and uses the determined resource for channel estimation.

The DMRS mapping type indicated by the DMRS indication information includes two cases.

A first case: the DMRS indication information is used to instruct the first terminal to use the legacy DMRS mapping type.

It should be noted that, in a case that the first terminal supports the enhanced DMRS mapping type, the first terminal can also support the legacy DMRS mapping type.

In an embodiment of the present disclosure, if the first terminal uses the legacy DMRS mapping type, the first terminal may use remaining resources when other terminals using the legacy DMRS mapping type do not fully use the resources.

A second case: the DMRS indication information is used to indicate the starting position corresponding to the enhanced DMRS mapping type.

The starting position refers to a starting position of a resource corresponding to the enhanced DMRS mapping type in a slot in a time domain. It can also be understood that the starting position is a starting position of the time domain.

In an embodiment of the present disclosure, the DMRS mapping type used by the first terminal at this time is the enhanced DRMS mapping type, and the network device may indicate the starting position corresponding to the enhanced DMRS mapping type through the DMRS indication information, so that the first terminal may use the DMRS indication information to facilitate the first terminal determines the resource based on the starting position.

In some embodiments, the first terminal needs to first report its own capability indication information to the network device. The capability indication information indicates whether the first terminal supports the enhanced DMRS mapping type, and then the network device determines the capability of the first terminal based on the capability indication information, and then sends the DMRS indication information to the first terminal.

The first terminal sends the capability indication information to the network device, and the capability indication information indicates that the first terminal supports the enhanced DMRS mapping type. The network device receives the capability indication information sent by the first terminal, and then determines the DMRS mapping type indicated by the first terminal based on the capability indication information.

It should be noted that in the embodiments of the present disclosure, the steps performed by the terminal can independently form a new embodiment, and the steps performed by the network device can independently form a new embodiment, which are not limited by the embodiments of the present disclosure.

In the solution provided by the embodiments of the present disclosure, when the first terminal supports the enhanced DMRS mapping type, the network device configures the legacy DMRS mapping type or the starting position corresponding to the enhanced DMRS mapping type for the first terminal, to ensure that when the first terminal coexists with another terminal that supports the legacy DMRS mapping type, the first terminal can use the resource of the legacy DMRS mapping type or determine another resource based on the starting position, thereby preventing the problem of interference between the first terminal and the second terminal, and thus improving the reliability of communication between the network device and various terminals.

The embodiment shown in FIG. 3 explains the function indicated by DMRS indication information. The following describes how to further indicate whether the terminal performs a fallback operation through an DCI when the DMRS indication information is used to indicate the enhanced DMRS mapping type.

For example, FIG. 4 shows a flow chart of a method for indicating DMRS information provided by an exemplary embodiment of the present disclosure. The method is exemplarily applicable to the first terminal and network device as shown in FIG. 1. The method includes at least part of the following contents.

Step 401, the network device sends a configuration signaling to the first terminal, in which the configuration signaling is used to configure the first terminal to use the enhanced DMRS mapping type.

Step 402, the first terminal receives the configuration signaling sent by the network device.

In an embodiment of the present disclosure, the network device instructs the first terminal to use the enhanced DMRS mapping type through the configuration signaling, and also instructs the first terminal, through DMRS indication information, whether to fall back to a legacy DMRS mapping type, so as to finally indicate a DMRS mapping type used by the first terminal.

Optionally, the manner in which the network device sends the DMRS indication information may be understood to mean that, every time the network device schedules, the network device uses the DMRS indication information to indicate the DMRS mapping type used by the first terminal.

In some embodiments, the configuration signaling is a radio resource control (RRC) signaling, which means that the network device configures the first terminal to use the enhanced DMRS mapping type through the RRC signaling in advance, and then configures whether the first terminal falls back to the legacy DMRS mapping type each time through the DMRS indication information.

Optionally, the DMRS indication information may be an RRC signaling, or downlink control information (DCI), or media access control control element (MAC CE), which is not limited in the embodiments of the present disclosure.

The function of the DMRS indication information includes any of the following two cases.

A first case: the DMRS indication information is used to instruct the first terminal to use the legacy DMRS mapping type, which means that the enhanced DMRS mapping type used by the first terminal falls back to the legacy DMRS mapping type.

In an embodiment of the present disclosure, if the network device determines that the first terminal can use a resource corresponding to the legacy DMRS mapping type, it sends to the first terminal the DMRS indication information that is used to instruct the first terminal to fall back from the enhanced DMRS mapping type used to the legacy DMRS mapping type, and then the first terminal may use the legacy DMRS mapping type.

In some embodiments, the DMRS indication information includes one bit. If the one bit included in the DMRS indication information is 1, it means that the DMRS indication information is used to indicate that the enhanced DMRS mapping type used by the first terminal falls back to the legacy DMRS mapping type. Alternatively, if the one bit included in the DMRS indication information is 0, it means that the DMRS indication information is used to indicate that the enhanced DMRS mapping type used by the first terminal falls back to the legacy DMRS mapping type.

It should be noted that the DMRS indication information in the embodiments of the present disclosure refers to that, in a case that the first terminal coexists with the second terminal using the legacy DMRS mapping type, and the first terminal can also use a code division multiplexing resource of the second terminal, the network device sends the DMRS indication information to the first terminal to instruct the first terminal to fall back to the legacy DMRS mapping type, and then the first terminal uses the legacy DMRS mapping type.

A second case: the DMRS indication information is used to instruct the first terminal to keep using the enhanced DMRS mapping type.

In an embodiment of the present disclosure, if the network device determines that the first terminal can directly use a resource corresponding to the enhanced DMRS mapping type, it sends to the first terminal the DMRS indication information that is used to instruct the first terminal not to fall back to the legacy DMRS mapping type, that is, to keep using the enhanced DMRS mapping type, and then the first terminal may use the enhanced DMRS mapping type.

In some embodiments, the DMRS indication information includes one bit. If the one bit included in the DMRS indication information is 1, it means that the DMRS indication information is used to indicate that the enhanced DMRS mapping type used by the first terminal does not fall back to the legacy DMRS mapping type, and keeping using the enhanced DMRS mapping type. Alternatively, if the one bit included in the DMRS indication information is 0, it means that the DMRS indication information is used to indicate that the enhanced DMRS mapping type used by the first terminal does not fall back to the legacy DMRS mapping type, and keeping using the enhanced DMRS mapping type.

It should be noted that the embodiments of the present disclosure are described by using the example that the network device sends the DMRS indication information to the first terminal to instruct the first terminal to keep using the enhanced DMRS mapping type. In another embodiment, the network device may not send the DMRS indication information. If the first terminal does not receive the DMRS indication information, it means that the first terminal determines to continue to use the enhanced DMRS mapping type by default.

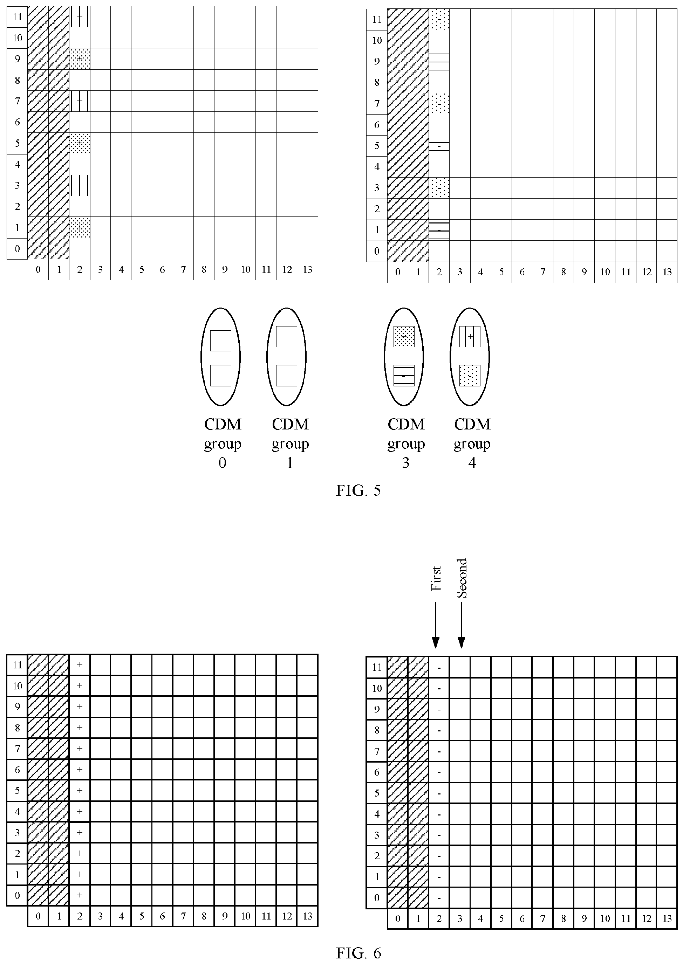

For example, if both the first terminal and the second terminal use the legacy DMRS mapping type, as shown in FIG. 5, the first terminal uses a white resource and the second terminal uses a "+" resource.

In some embodiments, the network device indicates a frequency domain resource that can be used by the first terminal by indicating a DMRS port used by the first terminal.

The network device sends port indication information to the first terminal, and the first terminal receives the port indication information sent by the network device. The port indication information is used to indicate the DMRS port used by the first terminal.

In an embodiment of the present disclosure, the first terminal determines a DMRS mapping type to be used, and may also determine the DMRS port to be used based on the port indication information. Then the terminal may determine, based on a mapping relationship between the DMRS port corresponding to the DMRS mapping type and the frequency domain resource, a frequency domain resource corresponding to the DMRS port used by the terminal.

Optionally, when the first terminal uses the enhanced DMRS mapping type, the frequency domain resource corresponding to the DMRS port of the first terminal is different from a frequency domain resource corresponding to a DMRS port of a second terminal supporting the legacy DMRS mapping type.

It should be noted that the DMRS indication information in the embodiments of the present disclosure means that, the first terminal does not coexist with the second terminal using the legacy DMRS mapping type. That is, the first terminal can directly use the enhanced DMRS mapping type to determine the resource and can use the determined resource for transmission, so that the network device sends to the terminal the DMRS indication information that is used to instruct the first terminal to keep using the enhanced DMRS mapping type, and then the first terminal uses the enhanced DMRS mapping type.

In addition, when the DMRS indication information in the embodiments of the present disclosure includes one bit, different values need to be used for the above two cases. For example, if the one bit included in the DMRS indication information is 1, it means that the DMRS indication information is used to indicate that the enhanced DMRS mapping type used by the first terminal falls back to the legacy DMRS mapping type, and if the one bit included in the DMRS indication information is 0, it means that the DMRS indication information is used to indicate that the enhanced DMRS mapping type used by the first terminal does not fall back to the legacy DMRS mapping type. Alternatively, if the one bit included in the DMRS indication information is 0, it means that the DMRS indication information is used to indicate that the enhanced DMRS mapping type used by the first terminal falls back to the legacy DMRS mapping type, and if the one bit included in the DMRS indication information is 1, it means that the DMRS indication information is used to indicate that the enhanced DMRS mapping type used by the first terminal does not fall back to the legacy DMRS mapping type.

In the solution provided by the embodiments of the present disclosure, the terminal is first configured to use the enhanced DMRS mapping type, and then the terminal is instructed whether to fall back to using the legacy DMRS mapping type through the DMRS indication information, ensuring that when occurring the case that the first terminal coexists with the second terminal supporting the legacy DMRS mapping type, the first terminal can use the resource of the legacy DMRS mapping type or determine another resource based on the starting position, which prevents the problem of interference between the first terminal and the second terminal, and thus improves the reliability of communication between the network device and various terminals.

The embodiment shown in FIG. 3 describes the functions indicated by the DMRS indication information. The following describes the DMRS indication information indicating a DMRS mapping type used by the first terminal through two indication information.

The DMRS indication information includes first indication information and second indication information. The first indication information instructs the first terminal to use a first DMRS mapping type or a second DMRS mapping type. The second indication information indicates that the first DMRS mapping type or the second DMRS mapping type used by the first terminal belongs to the legacy DMRS mapping type or the enhanced DMRS mapping type.

In some embodiments, the first DMRS mapping type is a type1 DMRS mapping type, and the second DMRS mapping type is a type2 DMRS mapping type.

In the embodiments of the present disclosure, the network device instructs the terminal to use the first DMRS mapping type or the second DMRS mapping type through the first indication information of the DMRS indication information, and when it is determined that the first terminal can use the legacy DMRS mapping type, the second indication information of the DMRS indication information indicates that the first DMRS mapping type or the second DMRS mapping type used by the terminal belongs to the enhanced DMRS mapping type or the legacy DMRS mapping type.

Optionally, both the first indication information and the second indication information include one bit. If the first indication information is 0, it is used to instruct the terminal to use the first DMRS mapping type; if the first indication information is 1, it is used to instruct the terminal to use the first DMRS mapping type. Alternatively, if the first indication information is 0, it is used to instruct the terminal to use the second DMRS mapping type; if the first indication information is 1, it is used to instruct the terminal to use the second DMRS mapping type.

If the second indication information is 0, it is used to indicate that the first DMRS mapping type or the second DMRS mapping type used by the terminal belongs to the legacy DMRS mapping type; if the second indication information is 1, it is used to indicate the first DMRS mapping type or the second DMRS mapping type used by the terminal belongs to the legacy DMRS mapping type. Alternatively, if the second indication information is 0, it is used to indicate that the first DMRS mapping type or the second DMRS mapping type used by the terminal belongs to the enhanced DMRS mapping type; if the second indication information is 1, it is used to indicate the first DMRS mapping type or the second DMRS mapping type used by the terminal belongs to the enhanced DMRS mapping type.

It should be noted that the first indication information and the second indication information need to use different values to indicate the two cases. For example, if the first indication information is 0, it is used to instruct the terminal to use the first DMRS mapping type; if the first indication information is 1, it is used to instruct the terminal to use the second DMRS mapping type. For another example, if the first indication information is 0, it is used to instruct the terminal to use the second DMRS mapping type; if the first indication information is 1, it is used to instruct the terminal to use the first DMRS mapping type.

For example, if the second indication information is 0, it is used to indicate that the first DMRS mapping type or the second DMRS mapping type used by the terminal belongs to the enhanced DMRS mapping type; if the second indication information is 1, it is used to indicate that the first DMRS mapping type or the second DMRS mapping type used by the terminal belongs to the legacy DMRS mapping type. For another example, if the second indication information is 0, it is used to indicate that the first DMRS mapping type or the second DMRS mapping type used by the terminal belongs to the legacy DMRS mapping type; if the second indication information is 1, it is used to indicate that the first DMRS mapping type or the second DMRS mapping type used by the terminal belongs to the enhanced DMRS mapping type.

In some embodiments, the network device indicates the frequency domain resource that can be used by the first terminal by indicating the DMRS port used by the first terminal.

The network device sends the port indication information to the first terminal, and the first terminal receives the port indication information sent by the network device. The port indication information is used to indicate the DMRS port used by the first terminal.

In the embodiments of the present disclosure, the first terminal determines the DMRS mapping type to be used, and can also determine the DMRS port to be used based on the port indication information. Then the terminal can determine, based on the mapping relationship between the DMRS port corresponding to the DMRS mapping type and the frequency domain resource, the frequency domain resource corresponding to the DMRS port used by the terminal.

Optionally, in a case that the first terminal uses the enhanced DMRS mapping type, the frequency domain resource corresponding to the DMRS port of the first terminal is different from the frequency domain resource corresponding to the DMRS port of the second terminal supporting the legacy DMRS mapping type..

In some embodiments, the first indication information of the DMRS indication information is carried on an RRC signaling, DCI, MAC CE or other signaling, which is not limited in the embodiments of the present disclosure. The second indication information can also be carried on an RRC signaling, DCI, MAC CE or other signaling, which is not limited in the embodiments of the present disclosure.

In the solution provided by the embodiments of the present disclosure, the network device indicates the DMRS mapping type used by the terminal through two indication information, ensuring that when occurring the case that the first terminal coexists with another terminal that supports the legacy DMRS mapping type, the first terminal can use the resource of the legacy DMRS mapping type or determine another resource based on the starting position, which prevents the problem of interference between the first terminal and the second terminal, and thus improves the reliability of communication between the network device and various terminals.

The embodiment shown in FIG. 3 describes the functions indicated by DMRS indication information. The following describes a signaling on which the DMRS indication information can be carried. The network device directly indicates the DMRS mapping type used by the first terminal through the DMRS indication information by way of dynamic scheduling.

In some embodiments, the DMRS indication information is carried on the MAC CE. That is, the network device sends the MAC CE to the terminal, and the DMRS indication information carried by the MAC CE indicates the DMRS mapping type used by the terminal.

In some other embodiments, the DMRS indication information is carried on the DCI. That is, the network device sends the DCI to the terminal, and the DMRS indication information carried by the DCI indicates the DMRS mapping type used by the terminal.

Optionally, the DMRS indication information instructs the terminal to use the legacy DMRS mapping type. Alternatively, the DMRS indication information instructs the terminal to use the enhanced DMRS mapping type.

In some embodiments, when the first terminal uses the enhanced DMRS mapping type, the frequency domain resource corresponding to the DMRS port of the first terminal is different from the frequency domain resource corresponding to the DMRS port of the second terminal supporting the legacy DMRS Mapping type.

In the solution provided by the embodiment of the present disclosure, the network device in the embodiments of the present disclosure directly carries the DMRS indication information through the MAC CE or DCI to indicate the DMRS mapping type used by the terminal. This enables the network device to dynamically configure the DMRS mapping type used by the terminal, ensuring that when occurring the case that the first terminal coexists with the second terminal supporting the legacy DMRS mapping type, the first terminal can use the resource of the legacy DMRS mapping type or determine another resource based on the starting position, which prevents the problem of interference between the first terminal and the second terminal, and thus improves the reliability of communication between the network device and various terminals.

The embodiment shown in FIG. 3 describes the functions indicated by DMRS indication information. The following describes a case in which the DMRS indication information indicates the starting position of the enhanced DMRS mapping type.

In the embodiments of the present disclosure, the first terminal may use the enhanced DMRS mapping type, and the network device informs the first terminal of the starting position of the enhanced DMRS mapping type through the DMRS indication information, and then the first terminal may determine the corresponding resource based on the starting position and the enhanced DMRS mapping type.

The following describes information included in the DMRS indication information.

A first case: when the DMRS indication information indicates the starting position corresponding to the enhanced DMRS mapping type, the DMRS indication information further includes a time domain offset, and the time domain offset is an offset relative to an initial position.

The initial position is set by the network device or agreed by a communication protocol, which is not limited in the embodiments of the present disclosure.

In an embodiment of the present disclosure, if the DMRS indication information includes the time domain offset, the starting position corresponding to the enhanced DMRS mapping type is a sum of the initial position and the time domain offset.

For example, if the initial position is *l*₀ and the time domain offset is *offset,* then the starting position corresponding to the enhanced DMRS mapping type is *l*₀ *+ offset.*

For example, as shown in FIG. 6, the time domain offset is 1, a DMRS of the second terminal uses a resource corresponding to a time domain position indicated by a first arrow, and a DMRS of the first terminal uses a resource corresponding to a time domain position indicated by a second arrow.

A second case: when the DMRS indication information indicates the starting position corresponding to the enhanced DMRS mapping type, the DMRS indication information also includes a time domain starting position.

The time domain starting position is a starting position in the time domain corresponding to the enhanced DMRS mapping type. Optionally, the time domain starting position refers to an actual position in the time domain, and there is no need to determine the starting position through the sum of the initial position and the offset.

For example, as shown in FIG. 6, the time domain starting position is 3, the DMRS of the second terminal uses a resource corresponding to the time domain position indicated by the first arrow, and the DMRS of the first terminal uses a resource corresponding to the time domain position indicated by the second arrow.

A third case: when the DMRS indication information indicates the starting position corresponding to the enhanced DMRS mapping type, the first terminal is instructed to use the initial position by default.

The initial position is set by the network device or agreed by the communication protocol, which is not limited in the embodiments of the present disclosure.

In some embodiments, if the DMRS indication information does not include any information, it means that the first terminal is instructed to use the initial position by default.

In the solution provided by the embodiments of the present disclosure, the network device in the embodiments of the present disclosure directly configures the starting position corresponding to the enhanced DMRS mapping type for the terminal, ensuring that when occurring the case that the first terminal coexists with the second terminal supporting the legacy DMRS mapping type, the first terminal can determine another resource based on the starting position, which prevents the problem of interference between the first terminal and the second terminal, and thus improves the reliability of communication between the network device and various terminals.

It should be noted that the above-mentioned embodiments can be split into new embodiments, or combined with other embodiments to form new embodiments. The combinations of the embodiments are not limited in the present disclosure.

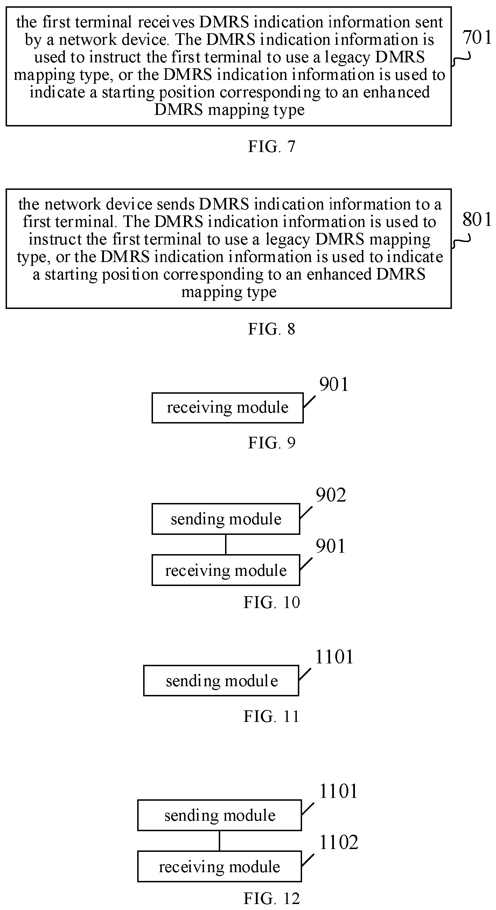

FIG. 7 shows a flow chart of a method for indicating DMRS information provided by an exemplary embodiment of the present disclosure. The method is exemplarily applicable to the first terminal as shown in FIG. 2. The method includes at least part of the following contents.

Step 701, the first terminal receives DMRS indication information sent by a network device. The DMRS indication information is used to instruct the first terminal to use a legacy DMRS mapping type, or the DMRS indication information is used to indicate a starting position corresponding to an enhanced DMRS mapping type.

The first terminal supports the enhanced DMRS mapping type.

In this embodiment of the present disclosure, the network device indicates the DMRS mapping type to be used by the first terminal through the DMRS indication information, so that after receiving the DMRS indication information, the first terminal determines to use the DMRS mapping type indicated by the DMRS indication information to determine a resource, and uses the determined resource for channel estimation.

The DMRS mapping type indicated by the DMRS indication information includes two cases.

A first case: the DMRS indication information is used to instruct the first terminal to use the legacy DMRS mapping type.

It should be noted that, in a case that the first terminal supports the enhanced DMRS mapping type, the first terminal can also support the legacy DMRS mapping type.

In an embodiment of the present disclosure, if the first terminal uses the legacy DMRS mapping type, the first terminal may use remaining resources when other terminals using the legacy DMRS mapping type do not fully use the resources.

A second case: the DMRS indication information is used to indicate the starting position corresponding to the enhanced DMRS mapping type.

The starting position refers to a starting position of a resource corresponding to the enhanced DMRS mapping type in a slot in a time domain. It can also be understood that the starting position is a starting position of the time domain.

In an embodiment of the present disclosure, the DMRS mapping type used by the first terminal at this time is the enhanced DRMS mapping type, and the network device may indicate the starting position corresponding to the enhanced DMRS mapping type through the DMRS indication information, so that the first terminal determines the resource based on the starting position.

In some embodiments, the first terminal needs to first report its own capability indication information to the network device. The capability indication information indicates whether the first terminal supports the enhanced DMRS mapping type, and then the network device determines the capability of the first terminal based on the capability indication information, and then sends the DMRS indication information to the first terminal.

The first terminal sends the capability indication information to the network device, and the capability indication information indicates that the first terminal supports the enhanced DMRS mapping type. The network device receives the capability indication information sent by the first terminal, and then determines the DMRS mapping type indicated by the first terminal based on the capability indication information.

In the solution provided by the embodiments of the present disclosure, when the first terminal supports the enhanced DMRS mapping type, the network device configures the legacy DMRS mapping type or the starting position corresponding to the enhanced DMRS mapping type for the first terminal, to ensure that when the first terminal coexists with another terminal that supports the legacy DMRS mapping type, the first terminal can use the resource of the legacy DMRS mapping type or determine another resource based on the starting position, thereby preventing the problem of interference between the first terminal and the second terminal, and thus improving the reliability of communication between the network device and various terminals.

In some embodiments, the first terminal receives a configuration signaling sent by the network device, and the configuration signaling is used to configure the first terminal to use the enhanced DMRS mapping type.

In the embodiments of the present disclosure, the network device instructs the first terminal to use the enhanced DMRS mapping type through the configuration signaling, and also instructs the first terminal whether to fall back to the legacy DMRS mapping type through the DMRS indication information, so as to finally indicate the DMRS mapping type used by the first terminal.

Optionally, the manner in which the network device sends the DMRS indication information may be understood to mean that every time the network device schedules, the network device uses the DMRS indication information to indicate the DMRS mapping type used by the first terminal.

In some embodiments, the configuration signaling is an RRC signaling, which means that the network device configures the first terminal to use the enhanced DMRS mapping type through the RRC signaling in advance, and then configures whether the first terminal falls back to the legacy DMRS mapping type each time through the DMRS indication information.

Optionally, the DMRS indication information may be an RRC signaling, or DCI, or MAC CE, which is not limited in the embodiments of the present disclosure.

The function of the DMRS indication information includes any of the following two cases.

A first case: the DMRS indication information is used to instruct the first terminal to use the legacy DMRS mapping type, which means that the enhanced DMRS mapping type used by the first terminal falls back to the legacy DMRS mapping type.

In an embodiment of the present disclosure, if the network device determines that the first terminal can use a resource corresponding to the legacy DMRS mapping type, it sends to the first terminal the DMRS indication information that is used to instruct the first terminal to fall back from the enhanced DMRS mapping type used to the legacy DMRS mapping type, and then the first terminal may use the legacy DMRS mapping type.

In some embodiments, the DMRS indication information includes one bit. If the one bit included in the DMRS indication information is 1, it means that the DMRS indication information is used to indicate that the enhanced DMRS mapping type used by the first terminal falls back to the legacy DMRS mapping type. Alternatively, if the one bit included in the DMRS indication information is 0, it means that the DMRS indication information is used to indicate that the enhanced DMRS mapping type used by the first terminal falls back to the legacy DMRS mapping type.

It should be noted that the DMRS indication information in the embodiments of the present disclosure refers to that, in a case that the first terminal coexists with the second terminal using the legacy DMRS mapping type, and the first terminal can also use a code division multiplexing resource of the second terminal, the network device sends the DMRS indication information to the first terminal to instruct the first terminal to fall back to the legacy DMRS mapping type, and then the first terminal uses the legacy DMRS mapping type.

A second case: the DMRS indication information is used to instruct the first terminal to keep using the enhanced DMRS mapping type.

In an embodiment of the present disclosure, if the network device determines that the first terminal can directly use a resource corresponding to the enhanced DMRS mapping type, it sends to the first terminal the DMRS indication information that is used to instruct the first terminal not to fall back to the legacy DMRS mapping type, that is, to keep using the enhanced DMRS mapping type, and then the first terminal may use the enhanced DMRS mapping type.

In some embodiments, the DMRS indication information includes one bit. If the one bit included in the DMRS indication information is 1, it means that the DMRS indication information is used to indicate that the enhanced DMRS mapping type used by the first terminal does not fall back to the legacy DMRS mapping type, and keeping using the enhanced DMRS mapping type. Alternatively, if the one bit included in the DMRS indication information is 0, it means that the DMRS indication information is used to indicate that the enhanced DMRS mapping type used by the first terminal does not fall back to the legacy DMRS mapping type, and keeping using the enhanced DMRS mapping type.

It should be noted that the embodiments of the present disclosure are described by using the example that the network device sends the DMRS indication information to the first terminal to instruct the first terminal to keep using the enhanced DMRS mapping type. In another embodiment, the network device may not send the DMRS indication information. If the first terminal does not receive the DMRS indication information, it means that the first terminal determines to continue to use the enhanced DMRS mapping type by default.

For example, if both the first terminal and the second terminal use the legacy DMRS mapping type, as shown in FIG. 5, the first terminal uses a white resource and the second terminal uses a "+" resource.

In some embodiments, the network device indicates a frequency domain resource that can be used by the first terminal by indicating a DMRS port used by the first terminal.

The network device sends port indication information to the first terminal, and the first terminal receives the port indication information sent by the network device. The port indication information is used to indicate the DMRS port used by the first terminal.

In an embodiment of the present disclosure, the first terminal determines a DMRS mapping type to be used, and may also determine the DMRS port to be used based on the port indication information. Then the terminal may determine, based on a mapping relationship between the DMRS port corresponding to the DMRS mapping type and the frequency domain resource, a frequency domain resource corresponding to the DMRS port used by the terminal.

Optionally, when the first terminal uses the enhanced DMRS mapping type, the frequency domain resource corresponding to the DMRS port of the first terminal is different from a frequency domain resource corresponding to a DMRS port of a second terminal supporting the legacy DMRS mapping type.

It should be noted that the DMRS indication information in the embodiments of the present disclosure means that, the first terminal does not coexist with the second terminal using the legacy DMRS mapping type. That is, the first terminal can directly use the enhanced DMRS mapping type to determine the resource and can use the determined resource for transmission, so that the network device sends to the terminal the DMRS indication information that is used to instruct the first terminal to keep using the enhanced DMRS mapping type, and then the first terminal uses the enhanced DMRS mapping type.

In addition, when the DMRS indication information in the embodiments of the present disclosure includes one bit, different values need to be used for the above two cases. For example, if the one bit included in the DMRS indication information is 1, it means that the DMRS indication information is used to indicate that the enhanced DMRS mapping type used by the first terminal falls back to the legacy DMRS mapping type, and if the one bit included in the DMRS indication information is 0, it means that the DMRS indication information is used to indicate that the enhanced DMRS mapping type used by the first terminal does not fall back to the legacy DMRS mapping type. Alternatively, if the one bit included in the DMRS indication information is 0, it means that the DMRS indication information is used to indicate that the enhanced DMRS mapping type used by the first terminal falls back to the legacy DMRS mapping type, and if the one bit included in the DMRS indication information is 1, it means that the DMRS indication information is used to indicate that the enhanced DMRS mapping type used by the first terminal does not fall back to the legacy DMRS mapping type.

In the solution provided by the embodiments of the present disclosure, the terminal is first configured to use the enhanced DMRS mapping type, and then the terminal is instructed whether to fall back to using the legacy DMRS mapping type through the DMRS indication information, ensuring that when occurring the case that the first terminal coexists with the second terminal supporting the legacy DMRS mapping type, the first terminal can use the resource of the legacy DMRS mapping type or determine another resource based on the starting position, which prevents the problem of interference between the first terminal and the second terminal, and thus improves the reliability of communication between the network device and various terminals.

In some embodiments, the DMRS indication information includes first indication information and second indication information. The first indication information instructs the first terminal to use a first DMRS mapping type or a second DMRS mapping type. The second indication information indicates that the first DMRS mapping type or the second DMRS mapping type used by the first terminal belongs to the legacy DMRS mapping type or the enhanced DMRS mapping type.

In some embodiments, the first DMRS mapping type is a type1 DMRS mapping type, and the second DMRS mapping type is a type2 DMRS mapping type.

In the embodiments of the present disclosure, the network device instructs the terminal to use the first DMRS mapping type or the second DMRS mapping type through the first indication information of the DMRS indication information, and when it is determined that the first terminal can use the legacy DMRS mapping type, the second indication information of the DMRS indication information indicates that the first DMRS mapping type or the second DMRS mapping type used by the terminal belongs to the enhanced DMRS mapping type or the legacy DMRS mapping type.

Optionally, both the first indication information and the second indication information include one bit. If the first indication information is 0, it is used to instruct the terminal to use the first DMRS mapping type; if the first indication information is 1, it is used to instruct the terminal to use the first DMRS mapping type. Alternatively, if the first indication information is 0, it is used to instruct the terminal to use the second DMRS mapping type; if the first indication information is 1, it is used to instruct the terminal to use the second DMRS mapping type.

If the second indication information is 0, it is used to indicate that the first DMRS mapping type or the second DMRS mapping type used by the terminal belongs to the legacy DMRS mapping type; if the second indication information is 1, it is used to indicate the first DMRS mapping type or the second DMRS mapping type used by the terminal belongs to the legacy DMRS mapping type. Alternatively, if the second indication information is 0, it is used to indicate that the first DMRS mapping type or the second DMRS mapping type used by the terminal belongs to the enhanced DMRS mapping type; if the second indication information is 1, it is used to indicate the first DMRS mapping type or the second DMRS mapping type used by the terminal belongs to the enhanced DMRS mapping type.

It should be noted that the first indication information and the second indication information need to use different values to indicate the two cases. For example, if the first indication information is 0, it is used to instruct the terminal to use the first DMRS mapping type; if the first indication information is 1, it is used to instruct the terminal to use the second DMRS mapping type. For another example, if the first indication information is 0, it is used to instruct the terminal to use the second DMRS mapping type; if the first indication information is 1, it is used to instruct the terminal to use the first DMRS mapping type.

For example, if the second indication information is 0, it is used to indicate that the first DMRS mapping type or the second DMRS mapping type used by the terminal belongs to the enhanced DMRS mapping type; if the second indication information is 1, it is used to indicate that the first DMRS mapping type or the second DMRS mapping type used by the terminal belongs to the legacy DMRS mapping type. For another example, if the second indication information is 0, it is used to indicate that the first DMRS mapping type or the second DMRS mapping type used by the terminal belongs to the legacy DMRS mapping type; if the second indication information is 1, it is used to indicate that the first DMRS mapping type or the second DMRS mapping type used by the terminal belongs to the enhanced DMRS mapping type.

In some embodiments, the network device indicates the frequency domain resource that can be used by the first terminal by indicating the DMRS port used by the first terminal.

The network device sends the port indication information to the first terminal, and the first terminal receives the port indication information sent by the network device. The port indication information is used to indicate the DMRS port used by the first terminal.

In the embodiments of the present disclosure, the first terminal determines the DMRS mapping type to be used, and can also determine the DMRS port to be used based on the port indication information. Then the terminal can determine, based on the mapping relationship between the DMRS port corresponding to the DMRS mapping type and the frequency domain resource, the frequency domain resource corresponding to the DMRS port used by the terminal.

Optionally, in a case that the first terminal uses the enhanced DMRS mapping type, the frequency domain resource corresponding to the DMRS port of the first terminal is different from the frequency domain resource corresponding to the DMRS port of the second terminal supporting the legacy DMRS mapping type..

In some embodiments, the first indication information of the DMRS indication information is carried on an RRC signaling, DCI, MAC CE or other signaling, which is not limited in the embodiments of the present disclosure. The second indication information can also be carried on an RRC signaling, DCI, MAC CE or other signaling, which is not limited in the embodiments of the present disclosure.

In the solution provided by the embodiments of the present disclosure, the network device indicates the DMRS mapping type used by the terminal through two indication information, ensuring that when occurring the case that the first terminal coexists with another terminal that supports the legacy DMRS mapping type, the first terminal can use the resource of the legacy DMRS mapping type or determine another resource based on the starting position, which prevents the problem of interference between the first terminal and the second terminal, and thus improves the reliability of communication between the network device and various terminals.

In some embodiments, the DMRS indication information is carried on the MAC CE. That is, the network device sends the MAC CE to the terminal, and the DMRS indication information carried by the MAC CE indicates the DMRS mapping type used by the terminal. The network device directly indicates the DMRS mapping type used by the first terminal through the DMRS indication information by way of dynamic scheduling.

In some other embodiments, the DMRS indication information is carried on the DCI. That is, the network device sends the DCI to the terminal, and the DMRS indication information carried by the DCI indicates the DMRS mapping type used by the terminal.

Optionally, the DMRS indication information instructs the terminal to use the legacy DMRS mapping type. Alternatively, the DMRS indication information instructs the terminal to use the enhanced DMRS mapping type.

In some embodiments, when the first terminal uses the enhanced DMRS mapping type, the frequency domain resource corresponding to the DMRS port of the first terminal is different from the frequency domain resource corresponding to the DMRS port of the second terminal supporting the legacy DMRS Mapping type.

In the solution provided by the embodiment of the present disclosure, the network device in the embodiments of the present disclosure directly carries the DMRS indication information through the MAC CE or DCI to indicate the DMRS mapping type used by the terminal. This enables the network device to dynamically configure the DMRS mapping type used by the terminal, ensuring that when occurring the case that the first terminal coexists with the second terminal supporting the legacy DMRS mapping type, the first terminal can use the resource of the legacy DMRS mapping type or determine another resource based on the starting position, which prevents the problem of interference between the first terminal and the second terminal, and thus improves the reliability of communication between the network device and various terminals.

In some embodiments of the present disclosure, the first terminal may use the enhanced DMRS mapping type, and the network device informs the first terminal of the starting position of the enhanced DMRS mapping type through the DMRS indication information, and then the first terminal may determine the corresponding resource based on the starting position and the enhanced DMRS mapping type.

The following describes information included in the DMRS indication information.

A first case: when the DMRS indication information indicates the starting position corresponding to the enhanced DMRS mapping type, the DMRS indication information further includes a time domain offset, and the time domain offset is an offset relative to an initial position.

The initial position is set by the network device or agreed by a communication protocol, which is not limited in the embodiments of the present disclosure.

In an embodiment of the present disclosure, if the DMRS indication information includes the time domain offset, the starting position corresponding to the enhanced DMRS mapping type is a sum of the initial position and the time domain offset.

For example, if the initial position is *l*₀ and the time domain offset is *offset,* then the starting position corresponding to the enhanced DMRS mapping type is *l*₀ *+ offset.*

For example, as shown in FIG. 6, the time domain offset is 1, a DMRS of the second terminal uses a resource corresponding to a time domain position indicated by a first arrow, and a DMRS of the first terminal uses a resource corresponding to a time domain position indicated by a second arrow.

A second case: when the DMRS indication information indicates the starting position corresponding to the enhanced DMRS mapping type, the DMRS indication information also includes a time domain starting position.

The time domain starting position is a starting position in the time domain corresponding to the enhanced DMRS mapping type. Optionally, the time domain starting position refers to an actual position in the time domain, and there is no need to determine the starting position through the sum of the initial position and the offset.

For example, as shown in FIG. 6, the time domain starting position is 3, the DMRS of the second terminal uses a resource corresponding to the time domain position indicated by the first arrow, and the DMRS of the first terminal uses a resource corresponding to the time domain position indicated by the second arrow.

A third case: when the DMRS indication information indicates the starting position corresponding to the enhanced DMRS mapping type, the first terminal is instructed to use the initial position by default.

The initial position is set by the network device or agreed by the communication protocol, which is not limited in the embodiments of the present disclosure.

In some embodiments, if the DMRS indication information does not include any information, it means that the first terminal is instructed to use the initial position by default.

In the solution provided by the embodiments of the present disclosure, the network device in the embodiments of the present disclosure directly configures the starting position corresponding to the enhanced DMRS mapping type for the terminal, ensuring that when occurring the case that the first terminal coexists with the second terminal supporting the legacy DMRS mapping type, the first terminal can determine another resource based on the starting position, which prevents the problem of interference between the first terminal and the second terminal, and thus improves the reliability of communication between the network device and various terminals.

FIG. 8 shows a flow chart of a method for indicating DMRS information provided by an exemplary embodiment of the present disclosure. The method is exemplarily applicable to the network device shown in FIG. 2. The method includes at least part of the following contents.

Step 801, the network device sends DMRS indication information to a first terminal. The DMRS indication information is used to instruct the first terminal to use a legacy DMRS mapping type, or the DMRS indication information is used to indicate a starting position corresponding to an enhanced DMRS mapping type.

The first terminal supports the enhanced DMRS mapping type.

In this embodiment of the present disclosure, the network device indicates the DMRS mapping type to be used by the first terminal through the DMRS indication information, so that after receiving the DMRS indication information, the first terminal determines to use the DMRS mapping type indicated by the DMRS indication information to determine a resource, and uses the determined resource for channel estimation.

The DMRS mapping type indicated by the DMRS indication information includes two cases.

A first case: the DMRS indication information is used to instruct the first terminal to use the legacy DMRS mapping type.

It should be noted that, in a case that the first terminal supports the enhanced DMRS mapping type, the first terminal can also support the legacy DMRS mapping type.

In an embodiment of the present disclosure, if the first terminal uses the legacy DMRS mapping type, the first terminal may use remaining resources when other terminals using the legacy DMRS mapping type do not fully use the resources.

A second case: the DMRS indication information is used to indicate the starting position corresponding to the enhanced DMRS mapping type.

The starting position refers to a starting position of a resource corresponding to the enhanced DMRS mapping type in a slot in a time domain. It can also be understood that the starting position is a starting position of the time domain.

In an embodiment of the present disclosure, the DMRS mapping type used by the first terminal at this time is the enhanced DRMS mapping type, and the network device may indicate the starting position corresponding to the enhanced DMRS mapping type through the DMRS indication information, so that the first terminal determines the resource based on the starting position.

In some embodiments, the first terminal needs to first report its own capability indication information to the network device. The capability indication information indicates whether the first terminal supports the enhanced DMRS mapping type, and then the network device determines the capability of the first terminal based on the capability indication information, and then sends the DMRS indication information to the first terminal.

The first terminal sends the capability indication information to the network device, and the capability indication information indicates that the first terminal supports the enhanced DMRS mapping type. The network device receives the capability indication information sent by the first terminal, and then determines the DMRS mapping type indicated by the first terminal based on the capability indication information.

In the solution provided by the embodiments of the present disclosure, when the first terminal supports the enhanced DMRS mapping type, the network device configures the legacy DMRS mapping type or the starting position corresponding to the enhanced DMRS mapping type for the first terminal, to ensure that when the first terminal coexists with another terminal that supports the legacy DMRS mapping type, the first terminal can use the resource of the legacy DMRS mapping type or determine another resource based on the starting position, thereby preventing the problem of interference between the first terminal and the second terminal, and thus improving the reliability of communication between the network device and various terminals.

In some embodiments, the network device sends a configuration signaling to the first terminal, and the configuration signaling is used to configure the first terminal to use the enhanced DMRS mapping type.

In the embodiments of the present disclosure, the network device instructs the first terminal to use the enhanced DMRS mapping type through the configuration signaling, and also instructs the first terminal whether to fall back to the legacy DMRS mapping type through the DMRS indication information, so as to finally indicate the DMRS mapping type used by the first terminal.

Optionally, the manner in which the network device sends the DMRS indication information may be understood to mean that every time the network device schedules, the network device uses the DMRS indication information to indicate the DMRS mapping type used by the first terminal.

In some embodiments, the configuration signaling is an RRC signaling, which means that the network device configures the first terminal to use the enhanced DMRS mapping type through the RRC signaling in advance, and then configures whether the first terminal falls back to the legacy DMRS mapping type each time through the DMRS indication information.

Optionally, the DMRS indication information may be an RRC signaling, or DCI, or MAC CE, which is not limited in the embodiments of the present disclosure.

The function of the DMRS indication information includes any of the following two cases.

A first case: the DMRS indication information is used to instruct the first terminal to use the legacy DMRS mapping type, which means that the enhanced DMRS mapping type used by the first terminal falls back to the legacy DMRS mapping type.

In an embodiment of the present disclosure, if the network device determines that the first terminal can use a resource corresponding to the legacy DMRS mapping type, it sends to the first terminal the DMRS indication information that is used to instruct the first terminal to fall back from the enhanced DMRS mapping type used to the legacy DMRS mapping type, and then the first terminal may use the legacy DMRS mapping type.

In some embodiments, the DMRS indication information includes one bit. If the one bit included in the DMRS indication information is 1, it means that the DMRS indication information is used to indicate that the enhanced DMRS mapping type used by the first terminal falls back to the legacy DMRS mapping type. Alternatively, if the one bit included in the DMRS indication information is 0, it means that the DMRS indication information is used to indicate that the enhanced DMRS mapping type used by the first terminal falls back to the legacy DMRS mapping type.

It should be noted that the DMRS indication information in the embodiments of the present disclosure refers to that, in a case that the first terminal coexists with the second terminal using the legacy DMRS mapping type, and the first terminal can also use a code division multiplexing resource of the second terminal, the network device sends the DMRS indication information to the first terminal to instruct the first terminal to fall back to the legacy DMRS mapping type, and then the first terminal uses the legacy DMRS mapping type.

A second case: the DMRS indication information is used to instruct the first terminal to keep using the enhanced DMRS mapping type.

In an embodiment of the present disclosure, if the network device determines that the first terminal can directly use a resource corresponding to the enhanced DMRS mapping type, it sends to the first terminal the DMRS indication information that is used to instruct the first terminal not to fall back to the legacy DMRS mapping type, that is, to keep using the enhanced DMRS mapping type, and then the first terminal may use the enhanced DMRS mapping type.

In some embodiments, the DMRS indication information includes one bit. If the one bit included in the DMRS indication information is 1, it means that the DMRS indication information is used to indicate that the enhanced DMRS mapping type used by the first terminal does not fall back to the legacy DMRS mapping type, and keeping using the enhanced DMRS mapping type. Alternatively, if the one bit included in the DMRS indication information is 0, it means that the DMRS indication information is used to indicate that the enhanced DMRS mapping type used by the first terminal does not fall back to the legacy DMRS mapping type, and keeping using the enhanced DMRS mapping type.

It should be noted that the embodiments of the present disclosure are described by using the example that the network device sends the DMRS indication information to the first terminal to instruct the first terminal to keep using the enhanced DMRS mapping type. In another embodiment, the network device may not send the DMRS indication information. If the first terminal does not receive the DMRS indication information, it means that the first terminal determines to continue to use the enhanced DMRS mapping type by default.

For example, if both the first terminal and the second terminal use the legacy DMRS mapping type, as shown in FIG. 5, the first terminal uses a white resource and the second terminal uses a "+" resource.

In some embodiments, the network device indicates a frequency domain resource that can be used by the first terminal by indicating a DMRS port used by the first terminal.

The network device sends port indication information to the first terminal, and the first terminal receives the port indication information sent by the network device. The port indication information is used to indicate the DMRS port used by the first terminal.

In an embodiment of the present disclosure, the first terminal determines a DMRS mapping type to be used, and may also determine the DMRS port to be used based on the port indication information. Then the terminal may determine, based on a mapping relationship between the DMRS port corresponding to the DMRS mapping type and the frequency domain resource, a frequency domain resource corresponding to the DMRS port used by the terminal.

Optionally, when the first terminal uses the enhanced DMRS mapping type, the frequency domain resource corresponding to the DMRS port of the first terminal is different from a frequency domain resource corresponding to a DMRS port of a second terminal supporting the legacy DMRS mapping type.

It should be noted that the DMRS indication information in the embodiments of the present disclosure means that, the first terminal does not coexist with the second terminal using the legacy DMRS mapping type. That is, the first terminal can directly use the enhanced DMRS mapping type to determine the resource and can use the determined resource for transmission, so that the network device sends to the terminal the DMRS indication information that is used to instruct the first terminal to keep using the enhanced DMRS mapping type, and then the first terminal uses the enhanced DMRS mapping type.

In addition, when the DMRS indication information in the embodiments of the present disclosure includes one bit, different values need to be used for the above two cases. For example, if the one bit included in the DMRS indication information is 1, it means that the DMRS indication information is used to indicate that the enhanced DMRS mapping type used by the first terminal falls back to the legacy DMRS mapping type, and if the one bit included in the DMRS indication information is 0, it means that the DMRS indication information is used to indicate that the enhanced DMRS mapping type used by the first terminal does not fall back to the legacy DMRS mapping type. Alternatively, if the one bit included in the DMRS indication information is 0, it means that the DMRS indication information is used to indicate that the enhanced DMRS mapping type used by the first terminal falls back to the legacy DMRS mapping type, and if the one bit included in the DMRS indication information is 1, it means that the DMRS indication information is used to indicate that the enhanced DMRS mapping type used by the first terminal does not fall back to the legacy DMRS mapping type.

In the solution provided by the embodiments of the present disclosure, the terminal is first configured to use the enhanced DMRS mapping type, and then the terminal is instructed whether to fall back to using the legacy DMRS mapping type through the DMRS indication information, ensuring that when occurring the case that the first terminal coexists with the second terminal supporting the legacy DMRS mapping type, the first terminal can use the resource of the legacy DMRS mapping type or determine another resource based on the starting position, which prevents the problem of interference between the first terminal and the second terminal, and thus improves the reliability of communication between the network device and various terminals.

In some embodiments, the DMRS indication information includes first indication information and second indication information. The first indication information instructs the first terminal to use a first DMRS mapping type or a second DMRS mapping type. The second indication information indicates that the first DMRS mapping type or the second DMRS mapping type used by the first terminal belongs to the legacy DMRS mapping type or the enhanced DMRS mapping type.

In some embodiments, the first DMRS mapping type is a type1 DMRS mapping type, and the second DMRS mapping type is a type2 DMRS mapping type.

In the embodiments of the present disclosure, the network device instructs the terminal to use the first DMRS mapping type or the second DMRS mapping type through the first indication information of the DMRS indication information, and when it is determined that the first terminal can use the legacy DMRS mapping type, the second indication information of the DMRS indication information indicates that the first DMRS mapping type or the second DMRS mapping type used by the terminal belongs to the enhanced DMRS mapping type or the legacy DMRS mapping type.

Optionally, both the first indication information and the second indication information include one bit. If the first indication information is 0, it is used to instruct the terminal to use the first DMRS mapping type; if the first indication information is 1, it is used to instruct the terminal to use the first DMRS mapping type. Alternatively, if the first indication information is 0, it is used to instruct the terminal to use the second DMRS mapping type; if the first indication information is 1, it is used to instruct the terminal to use the second DMRS mapping type.

If the second indication information is 0, it is used to indicate that the first DMRS mapping type or the second DMRS mapping type used by the terminal belongs to the legacy DMRS mapping type; if the second indication information is 1, it is used to indicate the first DMRS mapping type or the second DMRS mapping type used by the terminal belongs to the legacy DMRS mapping type. Alternatively, if the second indication information is 0, it is used to indicate that the first DMRS mapping type or the second DMRS mapping type used by the terminal belongs to the enhanced DMRS mapping type; if the second indication information is 1, it is used to indicate the first DMRS mapping type or the second DMRS mapping type used by the terminal belongs to the enhanced DMRS mapping type.

It should be noted that the first indication information and the second indication information need to use different values to indicate the two cases. For example, if the first indication information is 0, it is used to instruct the terminal to use the first DMRS mapping type; if the first indication information is 1, it is used to instruct the terminal to use the second DMRS mapping type. For another example, if the first indication information is 0, it is used to instruct the terminal to use the second DMRS mapping type; if the first indication information is 1, it is used to instruct the terminal to use the first DMRS mapping type.

For example, if the second indication information is 0, it is used to indicate that the first DMRS mapping type or the second DMRS mapping type used by the terminal belongs to the enhanced DMRS mapping type; if the second indication information is 1, it is used to indicate that the first DMRS mapping type or the second DMRS mapping type used by the terminal belongs to the legacy DMRS mapping type. For another example, if the second indication information is 0, it is used to indicate that the first DMRS mapping type or the second DMRS mapping type used by the terminal belongs to the legacy DMRS mapping type; if the second indication information is 1, it is used to indicate that the first DMRS mapping type or the second DMRS mapping type used by the terminal belongs to the enhanced DMRS mapping type.

In some embodiments, the network device indicates the frequency domain resource that can be used by the first terminal by indicating the DMRS port used by the first terminal.

The network device sends the port indication information to the first terminal, and the first terminal receives the port indication information sent by the network device. The port indication information is used to indicate the DMRS port used by the first terminal.

In the embodiments of the present disclosure, the first terminal determines the DMRS mapping type to be used, and can also determine the DMRS port to be used based on the port indication information. Then the terminal can determine, based on the mapping relationship between the DMRS port corresponding to the DMRS mapping type and the frequency domain resource, the frequency domain resource corresponding to the DMRS port used by the terminal.

Optionally, in a case that the first terminal uses the enhanced DMRS mapping type, the frequency domain resource corresponding to the DMRS port of the first terminal is different from the frequency domain resource corresponding to the DMRS port of the second terminal supporting the legacy DMRS mapping type..

In some embodiments, the first indication information of the DMRS indication information is carried on an RRC signaling, DCI, MAC CE or other signaling, which is not limited in the embodiments of the present disclosure. The second indication information can also be carried on an RRC signaling, DCI, MAC CE or other signaling, which is not limited in the embodiments of the present disclosure.

In the solution provided by the embodiments of the present disclosure, the network device indicates the DMRS mapping type used by the terminal through two indication information, ensuring that when occurring the case that the first terminal coexists with another terminal that supports the legacy DMRS mapping type, the first terminal can use the resource of the legacy DMRS mapping type or determine another resource based on the starting position, which prevents the problem of interference between the first terminal and the second terminal, and thus improves the reliability of communication between the network device and various terminals.

In some embodiments, the DMRS indication information is carried on the MAC CE. That is, the network device sends the MAC CE to the terminal, and the DMRS indication information carried by the MAC CE indicates the DMRS mapping type used by the terminal. The network device directly indicates the DMRS mapping type used by the first terminal through the DMRS indication information by way of dynamic scheduling.

In some other embodiments, the DMRS indication information is carried on the DCI. That is, the network device sends the DCI to the terminal, and the DMRS indication information carried by the DCI indicates the DMRS mapping type used by the terminal.

Optionally, the DMRS indication information instructs the terminal to use the legacy DMRS mapping type. Alternatively, the DMRS indication information instructs the terminal to use the enhanced DMRS mapping type.

In some embodiments, when the first terminal uses the enhanced DMRS mapping type, the frequency domain resource corresponding to the DMRS port of the first terminal is different from the frequency domain resource corresponding to the DMRS port of the second terminal supporting the legacy DMRS Mapping type.

In the solution provided by the embodiment of the present disclosure, the network device in the embodiments of the present disclosure directly carries the DMRS indication information through the MAC CE or DCI to indicate the DMRS mapping type used by the terminal. This enables the network device to dynamically configure the DMRS mapping type used by the terminal, ensuring that when occurring the case that the first terminal coexists with the second terminal supporting the legacy DMRS mapping type, the first terminal can use the resource of the legacy DMRS mapping type or determine another resource based on the starting position, which prevents the problem of interference between the first terminal and the second terminal, and thus improves the reliability of communication between the network device and various terminals.

In some embodiments of the present disclosure, the first terminal may use the enhanced DMRS mapping type, and the network device informs the first terminal of the starting position of the enhanced DMRS mapping type through the DMRS indication information, and then the first terminal may determine the corresponding resource based on the starting position and the enhanced DMRS mapping type.

The following describes information included in the DMRS indication information.

A first case: when the DMRS indication information indicates the starting position corresponding to the enhanced DMRS mapping type, the DMRS indication information further includes a time domain offset, and the time domain offset is an offset relative to an initial position.

The initial position is set by the network device or agreed by a communication protocol, which is not limited in the embodiments of the present disclosure.

In an embodiment of the present disclosure, if the DMRS indication information includes the time domain offset, the starting position corresponding to the enhanced DMRS mapping type is a sum of the initial position and the time domain offset.

For example, if the initial position is *l*₀ and the time domain offset is *offset,* then the starting position corresponding to the enhanced DMRS mapping type is *l*₀ *+ offset.*

For example, as shown in FIG. 6, the time domain offset is 1, a DMRS of the second terminal uses a resource corresponding to a time domain position indicated by a first arrow, and a DMRS of the first terminal uses a resource corresponding to a time domain position indicated by a second arrow.

A second case: when the DMRS indication information indicates the starting position corresponding to the enhanced DMRS mapping type, the DMRS indication information also includes a time domain starting position.

The time domain starting position is a starting position in the time domain corresponding to the enhanced DMRS mapping type. Optionally, the time domain starting position refers to an actual position in the time domain, and there is no need to determine the starting position through the sum of the initial position and the offset.

For example, as shown in FIG. 6, the time domain starting position is 3, the DMRS of the second terminal uses a resource corresponding to the time domain position indicated by the first arrow, and the DMRS of the first terminal uses a resource corresponding to the time domain position indicated by the second arrow.

A third case: when the DMRS indication information indicates the starting position corresponding to the enhanced DMRS mapping type, the first terminal is instructed to use the initial position by default.

The initial position is set by the network device or agreed by the communication protocol, which is not limited in the embodiments of the present disclosure.

In some embodiments, if the DMRS indication information does not include any information, it means that the first terminal is instructed to use the initial position by default.

In the solution provided by the embodiments of the present disclosure, the network device in the embodiments of the present disclosure directly configures the starting position corresponding to the enhanced DMRS mapping type for the terminal, ensuring that when occurring the case that the first terminal coexists with the second terminal supporting the legacy DMRS mapping type, the first terminal can determine another resource based on the starting position, which prevents the problem of interference between the first terminal and the second terminal, and thus improves the reliability of communication between the network device and various terminals.

FIG. 9 shows a block diagram of an apparatus for indicating DMRS information provided by an exemplary embodiment of the present disclosure. Referring to FIG. 9, the first terminal supports an enhanced DMRS mapping type. The apparatus includes:

a receiving module 901, configured to receive DMRS indication information sent by a network device. The DMRS indication information is used to instruct the first terminal to use a legacy DMRS mapping type, or the DMRS indication information is used to indicate a starting position corresponding to the enhanced DMRS mapping type.

In some embodiments, the receiving module 901 is configured to receive a configuration signaling sent by the network device, in which the configuration signaling is used to configure the first terminal to use the enhanced DMRS mapping type;
in which the DMRS indication information being used to instruct the first terminal to use the legacy DMRS mapping type means that the enhanced DMRS mapping type used by the first terminal falls back to the legacy DMRS mapping type; or
the DMRS indication information is used to instruct the first terminal to keep using the enhanced DMRS mapping type.

In some embodiments, the DMRS indication information includes first indication information and second indication information. The first indication information indicates that the first terminal uses the first DMRS mapping type in DMRS mapping types. The second indication information indicates that the first DMRS mapping type used by the terminal belongs to the legacy DMRS mapping type or the enhanced DMRS mapping type; or
the first indication information instructs the first terminal to use a second DMRS mapping type in the DMRS mapping types, and the second indication information indicates that the second DMRS mapping type used by the terminal belongs to the legacy DMRS mapping type or the enhanced DMRS mapping type.

In some embodiments, the DMRS indication information is carried on a MAC CE, or the DMRS indication information is carried on the DCI.

In some embodiments, the receiving module 901 is configured to receive port indication information sent by the network device, in which the port indication information is used to indicate a DMRS port used by the first terminal.

In some embodiments, in a case that the first terminal uses the enhanced DMRS mapping type, a frequency domain resource corresponding to the DMRS port of the first terminal is different from a frequency domain resource corresponding to a DMRS port of a second terminal supporting the legacy DMRS Mapping type.

In some embodiments, in a case that the DMRS indication information indicates the starting position corresponding to the enhanced DMRS mapping type, the DMRS indication information further includes a time domain offset, and the time domain offset is an offset relative to the initial position;
in a case that the DMRS indication information indicates the starting position corresponding to the enhanced DMRS mapping type, the DMRS indication information further includes a time domain starting position; or
in a case that the DMRS indication information indicates the starting position corresponding to the enhanced DMRS mapping type, the first terminal is instructed to use the initial position by default.

In some embodiments, referring to FIG. 10, the apparatus further includes:
a sending module 902, configured to send capability indication information to the network device, in which the capability indication information indicates that the first terminal supports the enhanced DMRS mapping type.

It should be noted that when implementing the functions of the apparatus provided by the above embodiments, only the division of the above functional modules is used as an example. In practical applications, the above functions can be allocated to different functional modules according to needs, that is, the internal structure of the apparatus is divided into different functional modules to complete all or part of the functions described above. In addition, the apparatus and method embodiments provided in the above embodiments belong to the same concept, and the specific implementation process can be found in the method embodiments, which will not be repeated here.

FIG. 11 shows a block diagram of an apparatus for indicating DMRS information provided by an exemplary embodiment of the present disclosure. Referring to FIG. 11, the apparatus includes:
a sending module 1101, configured to send DMRS indication information to a first terminal, in which the DMRS indication information is used to instruct the first terminal to use a legacy DMRS mapping type, or the DMRS indication information is used to indicate a starting position corresponding to an enhanced DMRS mapping type;
in which the first terminal supports the enhanced DMRS mapping type.

In some embodiments, the sending module 1101 is also used to send a configuration signaling to the first terminal, in which the configuration signaling is used to configure the first terminal to use the enhanced DMRS mapping type;
in which the DMRS indication information being used to instruct the first terminal to use the legacy DMRS mapping type means that the enhanced DMRS mapping type used by the first terminal falls back to the legacy DMRS mapping type; or
the DMRS indication information is used to instruct the first terminal to keep using the enhanced DMRS mapping type.

In some embodiments, the DMRS indication information includes first indication information and second indication information. The first indication information indicates that the first terminal uses the first DMRS mapping type in DMRS mapping types. The second indication information indicates that the first DMRS mapping type used by the terminal belongs to the legacy DMRS mapping type or the enhanced DMRS mapping type; or
the first indication information instructs the first terminal to use a second DMRS mapping type in the DMRS mapping types, and the second indication information indicates that the second DMRS mapping type used by the terminal belongs to the legacy DMRS mapping type or the enhanced DMRS mapping type.

In some embodiments, the DMRS indication information is carried on a MAC CE, or the DMRS indication information is carried on the DCI.

In some embodiments, the sending module 1101 is also configured to send port indication information to the first terminal, in which the port indication information is used to indicate a DMRS port used by the first terminal.

In some embodiments, in a case that the first terminal uses the enhanced DMRS mapping type, a frequency domain resource corresponding to the DMRS port of the first terminal is different from a frequency domain resource corresponding to a DMRS port of a second terminal supporting the legacy DMRS Mapping type.

In some embodiments, in a case that the DMRS indication information indicates the starting position corresponding to the enhanced DMRS mapping type, the DMRS indication information further includes a time domain offset, and the time domain offset is an offset relative to the initial position;
in a case that the DMRS indication information indicates the starting position corresponding to the enhanced DMRS mapping type, the DMRS indication information further includes a time domain starting position; or
in a case that the DMRS indication information indicates the starting position corresponding to the enhanced DMRS mapping type, the first terminal is instructed to use the initial position by default.

In some embodiments, referring to FIG. 12, the apparatus further includes:
a receiving module 1102, configured to receive capability indication information sent by the first terminal, in which the capability indication information indicates that the first terminal supports the enhanced DMRS mapping type.

It should be noted that when implementing the functions of the apparatus provided by the above embodiments, only the division of the above functional modules is used as an example. In practical applications, the above functions can be allocated to different functional modules according to needs, that is, the internal structure of the apparatus is divided into different functional modules to complete all or part of the functions described above. In addition, the apparatus and method embodiments provided in the above embodiments belong to the same concept, and the specific implementation process can be found in the method embodiments, which will not be repeated here.

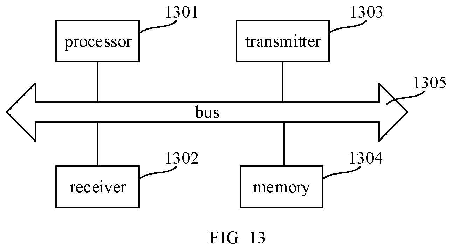

FIG. 13 shows a schematic structural diagram of a communication device provided by an exemplary embodiment of the present disclosure. The communication device includes: a processor 1301, a receiver 1302, a transmitter 1303, a memory 1304 and a bus 1305.

The processor 1301 includes one or more processing cores. The processor 1301 executes various functional applications and information processing by running software programs and modules.

The receiver 1302 and the transmitter 1303 may be implemented as a communication component, and the communication component may be a communication chip.

The memory 1304 is connected to the processor 1301 through the bus 1305.

The memory 1304 may be used to store at least one program code, and the processor 1301 is used to execute the at least one program code to implement each step in the above method embodiments.

Furthermore, the communication device may be a terminal or a network device. The memory 1304 may be implemented by any type of volatile or non-volatile storage device, or combination thereof, including but not limited to: a magnetic or optical disk, an electrically erasable programmable read-only memory (EEPROM), an erasable programmable read-only memory (EPROM), a static read-only memory (SRAM), a read-only memory (ROM), a magnetic memory, a flash memory, a programmable read-only memory (PROM).

In an exemplary embodiment, a computer-readable storage medium is also provided. An executable program code is stored in the readable storage medium, and the executable program code is loaded and executed by a processor to implement the above methods for indicating DMRS information, performed by the communication device, that are provided by the respective method embodiments.

In an exemplary embodiment, a chip is provided. The chip includes programmable logic circuits and/or program instructions. When the chip is run on a terminal or network device, it is used to implement the above methods for indicating DMRS information provided by the respective method embodiments.

In an exemplary embodiment, a communication system is provided. The communication system includes a terminal and a network device. The terminal is used to implement the methods for indicating DMRS information as described above. The network device is used to implement the methods for indicating DMRS information as described above.

In an exemplary embodiment, a computer program product is provided. When the computer program product is executed by a processor of a terminal or a network device, it is used to implement the method for indicating DMRS information provided by each of the above method embodiments.

Those of ordinary skill in the art can understand that all or part of the steps to implement the above embodiments can be completed by hardware, or can be completed by instructing relevant hardware through a program. The program may be stored in a computer-readable storage medium. The above-mentioned storage medium mentioned may be a read-only memory, a magnetic disk or an optical disk, etc.

The above are only optional embodiments of the present disclosure and are not intended to limit the present disclosure. Any modifications, equivalent substitutions, improvements, etc. made within the spirit and principles of the present disclosure shall be included in the protection scope of the present disclosure.

## Claims

1. A method for indicating demodulation reference signal (DMRS) information, performed by a first terminal supporting an enhanced DMRS mapping type, comprising:
receiving DMRS indication information sent by a network device, wherein the DMRS indication information is used to instruct the first terminal to use a legacy DMRS mapping type, or the DMRS indication information is used to indicate a starting position corresponding to the enhanced DMRS mapping type.

2. The method according to claim 1, further comprising:
receiving a configuration signaling sent by the network device, wherein the configuration signaling is used to configure the first terminal to use the enhanced DMRS mapping type;
wherein the DMRS indication information being used to instruct the first terminal to use the legacy DMRS mapping type means that the enhanced DMRS mapping type used by the first terminal falls back to the legacy DMRS mapping type; or
the DMRS indication information is used to instruct the first terminal to keep using the enhanced DMRS mapping type.

3. The method according to claim 1, wherein the DMRS indication information comprises first indication information and second indication information, the first indication information instructs the first terminal to use a first DMRS mapping type in DMRS mapping types, and the second indication information indicates that the first DMRS mapping type used by the terminal belongs to the legacy DMRS mapping type or the enhanced DMRS mapping type; or
the first indication information instructs the first terminal to use a second DMRS mapping type in the DMRS mapping types, and the second indication information indicates that the second DMRS mapping type used by the terminal belongs to the legacy DMRS mapping type or the enhanced DMRS mapping type.

4. The method according to claim 1, wherein the DMRS indication information is carried on a media access control control element (MAC CE), or the DMRS indication information is carried on downlink control information (DCI).

5. The method according to any one of claims 1 to 4, further comprising:
receiving port indication information sent by the network device, wherein the port indication information is used to indicate a DMRS port used by the first terminal.

6. The method according to claim 5, wherein in a case that the first terminal uses the enhanced DMRS mapping type, a frequency domain resource corresponding to the DMRS port of the first terminal is different from a frequency domain resource corresponding to a DMRS port of a second terminal supporting the legacy DMRS mapping type.

7. The method according to claim 1, wherein,
in a case that the DMRS indication information indicates the starting position corresponding to the enhanced DMRS mapping type, the DMRS indication information further comprises a time domain offset, and the time domain offset is an offset relative to an initial position;
in a case that the DMRS indication information indicates the starting position corresponding to the enhanced DMRS mapping type, the DMRS indication information further comprises a time domain starting position; or
in a case that the DMRS indication information indicates the starting position corresponding to the enhanced DMRS mapping type, the first terminal is instructed to use the initial position by default.

8. The method according to any one of claims 1 to 7, further comprising:
sending capability indication information to the network device, wherein the capability indication information indicates that the first terminal supports the enhanced DMRS mapping type.

9. A method for indicating demodulation reference signal (DMRS) information, performed by a network device, comprising:
sending DMRS indication information to a first terminal, wherein the DMRS indication information is used to instruct the first terminal to use a legacy DMRS mapping type, or the DMRS indication information is used to indicate a starting position corresponding to an enhanced DMRS mapping type;
wherein the first terminal supports the enhanced DMRS mapping type.

10. The method according to claim 9, further comprising:
sending a configuration signaling to the first terminal, wherein the configuration signaling is used to configure the first terminal to use the enhanced DMRS mapping type;
wherein the DMRS indication information being used to instruct the first terminal to use the legacy DMRS mapping type means that the enhanced DMRS mapping type used by the first terminal falls back to the legacy DMRS mapping type; or
the DMRS indication information is used to instruct the first terminal to keep using the enhanced DMRS mapping type.

11. The method according to claim 9, wherein,
the DMRS indication information comprises first indication information and second indication information, the first indication information instructs the first terminal to use a first DMRS mapping type in DMRS mapping types, and the second indication information indicates that the first DMRS mapping type used by the terminal belongs to the legacy DMRS mapping type or the enhanced DMRS mapping type; or
the first indication information instructs the first terminal to use a second DMRS mapping type in the DMRS mapping types, and the second indication information indicates that the second DMRS mapping type used by the terminal belongs to the legacy DMRS mapping type or the enhanced DMRS mapping type.

12. The method according to claim 9, wherein the DMRS indication information is carried on a media access control control element (MAC CE), or the DMRS indication information is carried on downlink control information (DCI).

13. The method according to any one of claims 9 to 12, further comprising:
sending port indication information to the first terminal, wherein the port indication information is used to indicate a DMRS port used by the first terminal.

14. The method according to claim 13, wherein in a case that the first terminal uses the enhanced DMRS mapping type, a frequency domain resource corresponding to the DMRS port of the first terminal is different from a frequency domain resource corresponding to a DMRS port of a second terminal supporting the legacy DMRS mapping type.

15. The method according to any one of claims 9 to 14, wherein,
in a case that the DMRS indication information indicates the starting position corresponding to the enhanced DMRS mapping type, the DMRS indication information further comprises a time domain offset, and the time domain offset is an offset relative to an initial position;
in a case that the DMRS indication information indicates the starting position corresponding to the enhanced DMRS mapping type, the DMRS indication information further comprises a time domain starting position; or
in a case that the DMRS indication information indicates the starting position corresponding to the enhanced DMRS mapping type, the first terminal is instructed to use the initial position by default.

16. The method according to any one of claims 9 to 15, further comprising:
receiving capability indication information sent by the first terminal, wherein the capability indication information indicates that the first terminal supports the enhanced DMRS mapping type.

17. An apparatus for indicating demodulation reference signal (DMRS) information, wherein a first terminal supports an enhanced DMRS mapping type, and the device comprises:
a receiving module, configured to receive DMRS indication information sent by a network device, wherein the DMRS indication information is used to instruct the first terminal to use a legacy DMRS mapping type, or the DMRS indication information is used to indicate a starting position corresponding to the enhanced DMRS mapping type.

18. An apparatus for indicating demodulation reference signal (DMRS) information, comprising:
a sending module, configured to send DMRS indication information to a first terminal, wherein the DMRS indication information is used to instruct the first terminal to use a legacy DMRS mapping type, or the DMRS indication information is used to indicate a starting position corresponding to an enhanced DMRS mapping type;
wherein the first terminal supports the enhanced DMRS mapping type.

19. A terminal, comprising:
a processor; and
a transceiver connected to the processor;
wherein the processor is configured to load and execute executable instructions to implement the method for indicating DMRS information according to any one of claims 1 to 8.

20. A network device, comprising:
a processor; and
a transceiver connected to the processor;
wherein the processor is configured to load and execute executable instructions to implement the method for indicating DMRS information according to any one of claims 9 to 16.

21. A communication system, comprising a terminal and a network device, wherein the terminal is configured to implement the method for indicating DMRS information according to any one of claims 1 to 8, and the network device is configured to implement the method for indicating DMRS information according to any one of claims 9 to 16.

22. A computer-readable storage medium, wherein an executable program code is stored in the readable storage medium, and the executable program code is loaded and executed by a processor to implement the method for indicating DMRS information according to any one of claims 1 to 16.
